# DEMANDE DE BREVET EUROPEEN

(11) **EP 1 138 195 A1**
(43) Date de publication de la demande: **04.10.2001**
(21) Numéro de dépôt: 01400712.4
(22) Date de dépôt: 19.03.2001
(51) Int. Cl.: A01J 25/15

(54) **Casquette de pressage pour exercer une pression sur un fromage à pâte pressée en cours de fabrication**

(30) Priorité: 24.03.2000 FR 0003782
(71) Demandeur: SOCIETE D'ETUDE, REALISATION ET VENTE A L'INDUSTRIE, SERVI S.A., 37130 Langeais (FR); Doryl S.A., 37130 Langeais (FR)
(72) Inventeur: Helaine, Christian, 37130 Cinq Mars la Pile (FR)
(74) Mandataire: Lemoine, Robert

(57) **Abrégé**

La casquette de pressage selon l'invention est caractérisée en ce qu'elle comprend :
- un premier élément (5) comportant une paroi latérale (6) et un fond (7) pourvu de perforations (8), le premier élément étant destiné à reposer par l'intermédiaire de son fond sur un fromage;
- un deuxième élément (9) comportant une partie inférieure (10) et une partie supérieure (11), les premier et deuxième éléments étant reliés l'un à l'autre de manière séparable et déplaçables axialement l'un par rapport à l'autre ; et
- un organe élastique (12) ayant une dureté prédéterminée et coopérant avec les premier et deuxième éléments afin qu'une pression exercée sur le deuxième élément soit transmise au fromage par le premier élément avec une valeur constante ou pratiquement constante quelle que soit la hauteur de ce fromage.

## Description

La présente invention concerne une casquette de pressage destinée à exercer une pression prédéterminée sur un fromage à pâte pressée contenu dans un moule.

On précisera tout d'abord que les casquettes de pressage sont utilisées pour parfaire l'égouttage des fromages à pâte pressée avant leur extraction des moules.

Les quantités de caillé déversées dans les moules ne sont pas très précises et il arrive fréquemment que les fromages résultants présentent des différences de hauteur pouvant aller jusqu'à 5 mm.

Or, par suite de ces différences de hauteur, les casquettes de pressage actuelles exercent sur les fromages des pressions différentes, ce qui peut entraîner des différences de qualité entre les fromages d'un même lot et être mal perçu par les consommateurs.

La présente invention se propose d'apporter une solution à ce problème et, pour ce faire, elle a pour objet une casquette de pressage qui est caractérisée en ce qu'elle comprend :
- un premier élément comportant une paroi latérale et un fond pourvu de perforations, le premier élément étant destiné à être inséré dans le moule avec un faible jeu jusqu'à ce que son fond repose sur le fromage ;
- un deuxième élément comportant une partie inférieure logée au moins partiellement dans le premier élément et une partie supérieure s'étendant à l'extérieur du premier élément, les premier et deuxième éléments étant reliés l'un à l'autre de manière séparable et déplaçables axialement l'un par rapport à l'autre ; et
- un organe élastique ayant une dureté prédéterminée et coopérant avec les premier et deuxième éléments afin qu'une pression exercée sur le deuxième élément soit transmise au fromage par le premier élément avec une valeur constante ou pratiquement constante quelle que soit la hauteur de ce fromage.

Grâce à cette casquette de pressage, il est maintenant possible d'exercer une pression constante ou pratiquement constante sur un fromage en cours de fabrication, l'organe élastique étant apte à compenser les différences de hauteur des fromages en se déformant plus ou moins en fonction de la pression exercée sur la casquette.

Selon un mode de réalisation particulier de l'invention, l'organe élastique est supporté par le premier élément mais supporte le deuxième élément, et est de préférence constitué par une bande amovible, souple et refermée sur elle-même.

En raison de sa souplesse et de son indépendance vis-à-vis des premier et deuxième éléments, l'organe élastique peut être enlevé très facilement, par exemple pour faciliter le nettoyage de la casquette ou pour être remplacé lorsque ses performances mécaniques ne donnent plus satisfaction.

La bande constituant l'organe élastique peut avantageusement comporter une succession d'ondulations ayant un pas constant.

Il suffit bien entendu d'équiper la casquette d'une bande dont les ondulations ont un pas prédéterminé pour transmettre aux fromages en cours de fabrication les pressions souhaitées.

Dans le mode de réalisation ci-dessus, le deuxième élément de la casquette peut par ailleurs comporter des orifices dans sa partie située en face de la surface périphérique interne de l'organe élastique, ces orifices étant destinés à faciliter les opérations de nettoyage en permettant au fluide utilisé de circuler plus librement.

Selon un autre mode de réalisation particulier de l'invention, l'organe élastique est solidaire de l'un des premier et deuxième éléments.

Plus précisément, il est situé entre deux parties constitutives de l'élément dont il est solidaire et relie ces deux parties en les maintenant espacées axialement.

L'organe élastique peut par ailleurs comporter une succession de trous identiques et équidistants de façon à présenter une dureté prédéterminée.

Dans les deux modes de réalisation présentés ci-dessus, l'organe élastique est de préférence réalisé en une matière élastomère.

Conformément à l'invention, l'un au moins des premier et deuxième éléments peut par ailleurs comporter au moins une barrette de renforcement interne disposée selon un diamètre afin d'augmenter la solidité de la casquette.

Avantageusement, les premier et deuxième éléments sont reliés l'un à l'autre de préférence par encliquetage, l'un d'eux comportant des doigts tandis que l'autre comporte des lumières verticales dans lesquelles les doigts font saillie.

Ces deux éléments peuvent ainsi être reliés ou séparés très rapidement, ce qui permet des gains de temps appréciables au moment du nettoyage de la casquette. Ils peuvent en outre se déplacer l'un par rapport à l'autre et permettre ainsi une application progressive de la pression sur le fromage.

D'autre part, l'une des surfaces périphériques en regard des premier et deuxième éléments peut comporter des nervures verticales en contact avec l'autre surface périphérique.

Grâce à ces nervures, un espace uniforme prédéterminé est ménagé entre les surfaces périphériques en regard des premier et deuxième éléments, ce qui facilite les opérations de nettoyage en créant un passage pour les produits utilisés.

Pour que la circulation des produits de nettoyage soit encore plus facile, la paroi latérale du premier élément peut être pourvue de lumières régulièrement espacées.

On précisera enfin que les premier et deuxième éléments sont de préférence réalisés en polypropylène ou en polyéthylène.

Deux modes d'exécution de la présente invention seront décrits ci-après à titre d'exemples nullement limitatifs en référence aux dessins annexés dans lesquels :
- la figure 1 est une vue de face schématique et en coupe partielle montrant un moule à fromage utilisé conjointement avec une casquette de pressage conforme à l'invention ;
- la figure 2 est une vue de dessus de la casquette ;
- la figure 3 est une vue en coupe selon la ligne III-III de la figure 4, le moule n'étant pas représenté pour plus de clarté ;
- la figure 4 est une vue en coupe selon la ligne IV-IV de la figure 3 ;
- la figure 5 est une vue de face schématique d'une autre casquette de pressage conforme à l'invention ; et
- la figure 6 est une vue en coupe selon la ligne VI-VI de la figure 5.

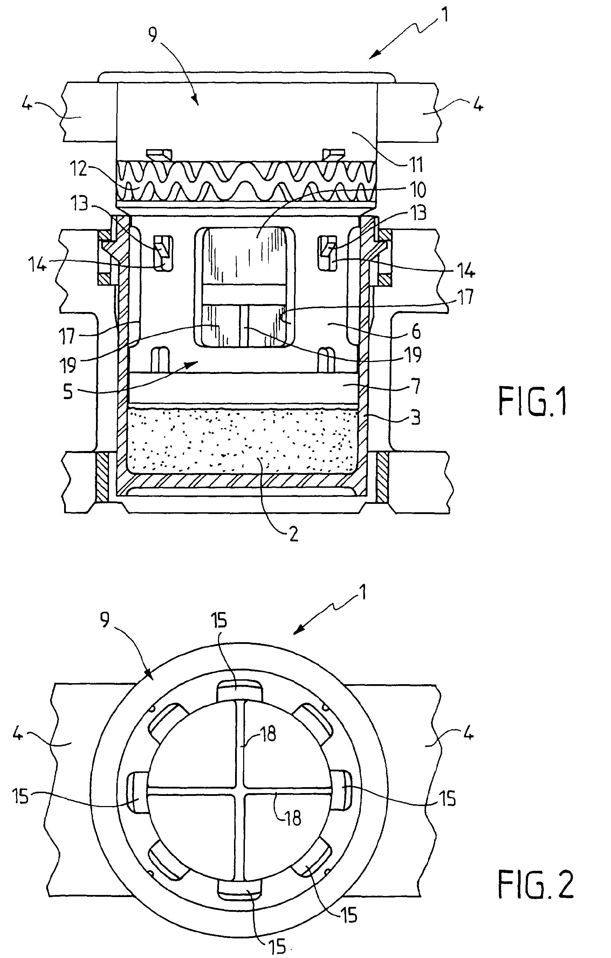

La casquette de pressage 1 visible sur les figures 1 à 4 est destinée à exercer une pression prédéterminée sur un fromage à pâte pressée 2 contenu dans un moule 3.

Elle est montée conjointement avec le moule 3 dans une ossature conventionnelle 4 par rapport à laquelle elle peut se déplacer verticalement, cette ossature permettant de regrouper plusieurs casquettes et plusieurs moules contenant des fromages destinés à être soumis à des pressions constantes, quelle que soit leur hauteur.

Comme on peut le voir sur les figures 1 à 4, la casquette 1 comprend un premier élément 5 comportant une paroi latérale 6 et un fond 7 pourvu de perforations 8, de préférence très fines, un deuxième élément 9 comportant une partie inférieure 10 logée partiellement dans l'élément 5 et une partie supérieure 11 s'étendant à l'extérieur de ce dernier, et un organe élastique amovible 12 supporté par l'élément 5 mais supportant l'élément 9.

L'élément 5 est inséré avec un faible jeu dans le moule 3 et repose sur le fromage 2 par l'intermédiaire de son fond 7. Afin qu'il puisse être déplacé axialement dans le moule 2 sans risque de coincement, sa paroi latérale 6 a une section transversale externe dont les dimensions sont légèrement inférieures à celles de la section transversale interne de la paroi latérale du moule 3.

Dans le mode de réalisation représenté, les parois latérales de l'élément 5 et du moule 3 ont une section transversale circulaire mais il va de soi que leur section pourrait avoir une forme différente sans que l'on sorte pour autant du cadre de la présente invention.

La partie inférieure 10 de l'élément 9 est insérée avec un faible jeu dans l'élément 5 de manière à pouvoir se déplacer verticalement dans ce dernier sans risque de coincement. Elle porte sur la face externe de sa paroi latérale des doigts 13 faisant saillie dans des lumières verticales 14 ménagées dans la paroi latérale de l'élément 5.

Grâce à cette disposition, les éléments 5 et 9 sont reliés l'un à l'autre tout en pouvant se déplacer axialement l'un par rapport à l'autre.

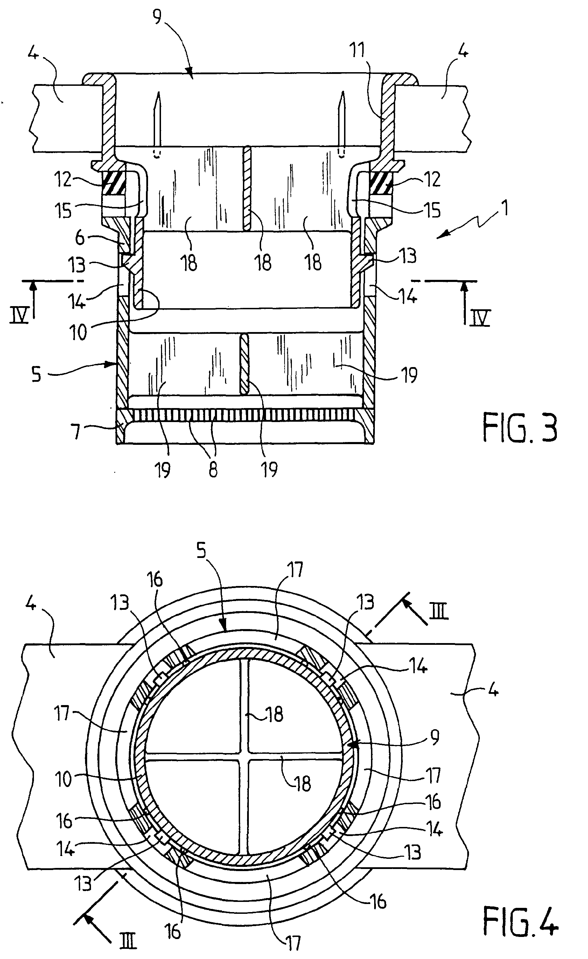

La partie supérieure 11 de l'élément 9 a une section transversale légèrement supérieure à celle de la partie inférieure 10 mais pratiquement identique à celle de l'élément 5 de sorte qu'elle s'étend au-dessus de ce dernier, comme le montre clairement la figure 3.

L'organe élastique 12 est constitué par une bande souple refermée sur elle-même et est réalisé en matière élastomère.

Il présente une dureté prédéterminée grâce à laquelle une pression exercée sur la partie supérieure 11 de l'élément 9 peut être transmise au fromage 2 avec une valeur constante ou pratiquement constante quelle que soit la hauteur de ce dernier.

Dans l'exemple représenté, la bande constituant l'organe élastique 12 comporte une succession d'ondulations ayant un pas constant.

Il va de soi que l'on pourrait modifier la dureté de l'organe élastique, afin d'adapter la pression exercée sur les fromages à la hauteur de ces derniers, en modifiant le pas ou la forme des ondulations de la bande.

On pourrait également utiliser une bande dont les faces destinées à venir respectivement en contact avec l'élément 5 et la partie supérieure 11 de l'élément 9 seraient parallèles et planes, cette bande pouvant alors comporter des trous identiques uniformément répartis sur toute sa longueur.

En se référant à la figure 3, on remarquera que l'élément 9 comporte, dans sa partie située au niveau de l'organe élastique 12, des orifices 15 destinés à faciliter la circulation du fluide utilisé pour nettoyer la casquette.

Par ailleurs, en se référant à la figure 4, on constatera que la surface périphérique externe de la partie inférieure 10 de l'élément 9 comporte des nervures verticales 16 prenant appui contre la surface périphérique interne de l'élément 5.

Grâce à ces nervures qui permettent la création d'un interstice entre les surfaces en regard des éléments 5 et 9, le fluide de nettoyage dispose d'un passage pour se propager entre ces éléments et agir efficacement.

En revenant à la figure 1, on remarquera encore que la paroi latérale 6 de l'élément 5 est pourvue de lumières 17 régulièrement espacées et grâce auxquelles le fluide de nettoyage utilisé peut atteindre plus facilement toutes les parties internes de la casquette.

Enfin, on précisera que les éléments 5 et 9 comportent chacun deux barrettes de renforcement internes 18, respectivement 19, s'étendant selon deux diamètres perpendiculaires, et qu'ils sont réalisés en matière plastique, de préférence en polypropylène ou en polyéthylène.

Les éléments 5 et 9 peuvent être facilement désolidarisés puisqu'il suffit d'exercer sur eux une traction tendant à les éloigner l'un de l'autre pour extraire les doigts 13 des lumières 14.

Leur solidarisation peut également être réalisée facilement puisqu'il suffit d'introduire légèrement à force la partie inférieure 10 de l'élément 9 dans l'élément 5, dans la position adéquate pour que les doigts 13 viennent s'encliqueter dans les lumières 14.

Les organes 5 et 9 étant séparables, l'organe élastique peut bien entendu être facilement remplacé, par exemple lorsqu'il a perdu ses propriétés élastiques d'origine sous l'effet d'opérations de nettoyage successives.

Il ressort de la description ci-dessus que la casquette de pressage représentée sur les figures 1 à 4 permet d'exercer sur le fromage 2 contenu dans le moule 3 une pression constante, quelle que soit la hauteur de ce fromage.

En effet, grâce à sa dureté prédéterminée, l'organe élastique 12 peut se déformer plus ou moins pour s'adapter à la hauteur du fromage à presser et permettre à la casquette de transmettre à ce dernier la pression souhaitée.

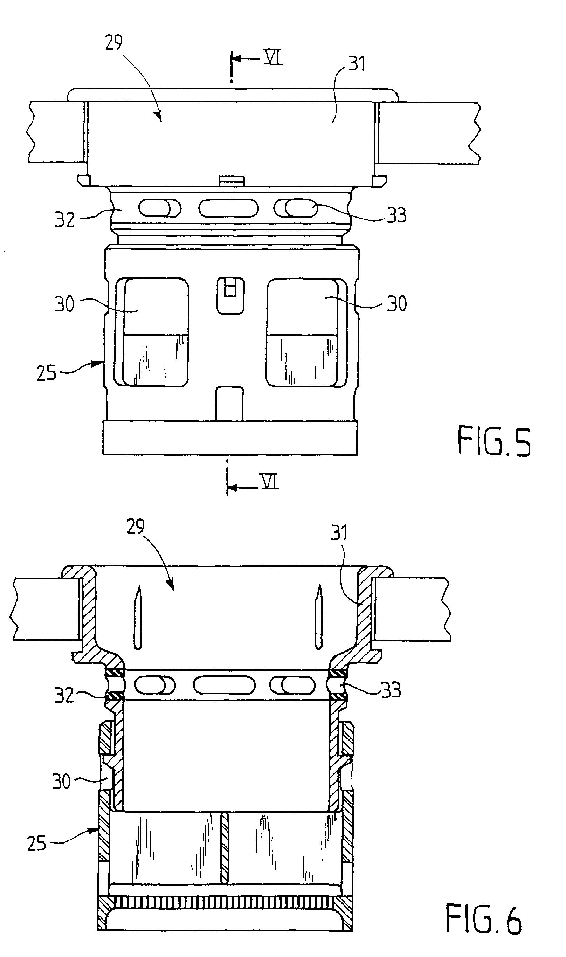

La casquette représentée sur les figures 5 et 6 présente de grandes similitudes avec celle qui vient d'être décrite et l'on s'abstiendra de décrire à nouveau ci-après les parties constitutives communes aux deux casquettes.

On notera simplement que la casquette visible sur les figures 5 et 6 comprend un premier élément 25 identique au premier élément 5, un deuxième élément 29 comportant une partie inférieure 30 logée partiellement dans l'élément 25 et une partie supérieure 31 s'étendant à l'extérieur de ce dernier, et un organe élastique 32 réalisé en matière élastomère.

En fait, la casquette visible sur les figures 5 et 6 diffère de la précédente essentiellement en ce que son organe élastique 32 n'est pas amovible, mais solidaire du deuxième élément 29.

L'organe élastique 32 est en effet situé entre la partie inférieure 30 et la partie supérieure 31 de l'élément 29 et relie ces deux parties en les maintenant espacés axialement.

Il a une hauteur constante et est de forme cylindrique, sa section étant telle que ses surfaces périphériques intérieure et extérieure sont dans le prolongement de celles du deuxième élément 29.

Dans l'exemple représenté, l'organe élastique 32 comporte une succession de trous 33 identiques et uniformément répartis le long de son pourtour. La forme, la taille et le nombre de ses trous pourraient toutefois être modifiés afin qu'il présente une dureté différente prédéterminée.

On notera que l'élément supérieur 29 de la casquette peut être réalisé en injectant la quantité de matière élastomère nécessaire à la formation de l'organe élastique 32 entre une partie inférieure 30 et une partie supérieure 31 maintenues à une distance prédéterminée l'une de l'autre dans un moule approprié.

Il pourrait toutefois être réalisé en une seule opération à l'aide d'une machine à injection bi-matières.

Il ressort de ce qui précède que la casquette visible sur les figures 5 et 6 est constituée de deux éléments et peut donc être nettoyée plus rapidement que la casquette en trois éléments représentée sur les figures 1 à 4.

Lorsque l'organe élastique 32 ne donne plus satisfaction, il est toutefois nécessaire de remplacer l'élément 29 qui est plus coûteux que l'organe élastique 12 de la casquette représentée sur les figures 1 à 4.

Le choix de la casquette de pressage dépendra donc des conditions dans lesquelles elle sera utilisée.

Il va de soi que l'on ne sortirait pas du cadre de la présente invention si l'organe élastique 32 faisait partie intégrante du premier élément et non du deuxième.

## Revendications

1. Casquette de pressage (1) destinée à exercer une pression prédéterminée sur un fromage à pâte pressée (2) contenu dans un moule (3), **caractérisée en ce qu'**elle comprend :
- un premier élément (5;25) comportant une paroi latérale (6) et un fond (7) pourvu de perforations (8), le premier élément étant destiné à être inséré dans le moule (3) avec un faible jeu jusqu'à ce que son fond repose sur le fromage (2) ;
- un deuxième élément (9;29) comportant une partie inférieure (10;30)) logée au moins partiellement dans le premier élément et une partie supérieure (11;31)) s'étendant à l'extérieur du premier élément, les premier et deuxième éléments étant reliés l'un à l'autre de manière séparable et déplaçables axialement l'un par rapport à l'autre ; et
- un organe élastique (12;32) ayant une dureté prédéterminée et coopérant avec les premier et deuxième éléments (5,9;25,29) afin qu'une pression exercée sur le deuxième élément soit transmise au fromage par le premier élément avec une valeur constante ou pratiquement constante quelle que soit la hauteur de ce fromage.

2. Casquette selon la revendication 1, **caractérisée en ce que** l'organe élastique (12) est supporté par le premier élément (5) mais supporte le deuxième élément (9).

3. Casquette selon la revendication 2, **caractérisée en ce que** l'organe élastique (12) est constitué par une bande amovible, souple et refermée sur elle-même.

4. Casquette selon la revendication 3, **caractérisée en ce que** la bande (12) comporte une succession d'ondulations ayant un pas constant.

5. Casquette selon l'une quelconque des revendications 2 à 4, **caractérisée en ce que** le deuxième élément (9) comporte des orifices (15) dans sa partie située en face de la surface périphérique interne de l'organe élastique (12).

6. Casquette selon la revendication 1, **caractérisée en ce que** l'organe élastique (32) est solidaire de l'un des premier et deuxième éléments (25,29).

7. Casquette selon la revendication 6, **caractérisée en ce que** l'organe élastique (32) est situé entre deux parties constitutives de l'élément dont il est solidaire et relie ces deux parties en les maintenant espacées axialement.

8. Casquette selon la revendication 6 ou 7, **caractérisée en ce que** l'organe élastique (32) comporte une succession de trous (33) identiques et équidistants.

9. Casquette selon l'une quelconque des revendications précédentes, **caractérisée en ce que** l'organe élastique (12;32) est réalisé en une matière élastomère.

10. Casquette selon l'une quelconque des revendications précédentes, **caractérisée en ce que** l'un au moins des premier et deuxième éléments (5,9) comporte au moins une barrette de renforcement interne (18,resp. 19) disposée selon un diamètre.

11. Casquette selon l'une quelconque des revendications précédentes, **caractérisée en ce que** les premier et deuxième éléments (5,9) sont reliés l'un à l'autre par encliquetage, l'un d'eux comportant des doigts (13) tandis que l'autre comporte des lumières verticales (14) dans lesquelles les doigts font saillie.

12. Casquette selon l'une quelconque des revendications précédentes, **caractérisée en ce que** l'une des surfaces périphériques en regard des premier et deuxième éléments (5,9) comporte des nervures verticales (16) en contact avec l'autre surface périphérique.

13. Casquette selon l'une quelconque des revendications précédentes, **caractérisée en ce que** la paroi latérale (6) du premier élément (5) est pourvue de lumières (17) régulièrement espacées.

14. Casquette selon l'une quelconque des revendications précédentes, **caractérisée en ce que** les premier et deuxième éléments sont en polypropylène ou en polyéthylène.
